# EUROPEAN PATENT SPECIFICATION

(11) **EP 3 509 047 B1**
(45) Date of publication and mention of the grant of the patent: **01.07.2020**
(21) Application number: 18759144.1
(22) Date of filing: 28.03.2018
(51) Int. Cl.: G08B 25/01, G08B 25/08, G08B 21/02, B62J 27/00

(54) **SYSTEM FOR DETECTING AND REPORTING MOTORCYCLE ACCIDENTS**
DETEKTIERUNGS- UND NOTRUFEINRICHTUNG FÜR MOTORRADUNFÄLLE
SYSTÈME POUR LA DÉTECTION ET LA NOTIFICATION D'ACCIDENTS DE MOTOS

(30) Priority: 31.03.2017 ES 201730542
(43) Date of publication of application: 10.07.2019
(73) Proprietor: Centro Tecnologico del Mueble y La Madera de la Region de Murcia, 30510 Murcia (ES); Advanced Safety Concepts, S.L.U., 22336 Huesca (ES)
(72) Inventor: MAESTRE FERRIZ, Rafael, 30510 Murcia (ES); NACENTA SENZ, José María, 30510 Murcia (ES); BLEDA TOMÁS, Andrés Lorenzo, 30510 Murcia (ES); SANT CARVAJAL, Guadalupe, 30510 Murcia (ES); PELLICER FERNÁNDEZ, Soledad, 30510 Murcia (ES)
(74) Representative: Isern Patentes y Marcas S.L.
(86) International application number: PCT/ES2018/070279
(87) International publication number: WO 2018/178490

(56) References cited:
- WO-A1-2016/107846
- DE-U1-202017 100 238
- JP-A- 2001 030 971
- US-A1- 2016 007 384

## Description

### Field of the invention

The present invention generally relates to a system for detecting and reporting motorcycle accidents. In particular, the invention relates to a system that incorporates several modules with the capability of detecting when an accident has taken place and making an emergency call or eCall in accordance with current regulations.

### Background of the invention

In the last several years the automotive industry has been working on adopting a new safety system called eCall. In fact, the European Commission has decided that this new system shall be mandatory for car manufacturers in relation to all new vehicles produced starting in April of 2018.

The system consists of detecting accidents and automatically making an emergency call to emergency services, said call made by the vehicle itself, dialling the number 112 in Europe and reporting that an accident has happened. The system for receiving the call will be standardized in the 27 European Union (EU) member countries.

The call made by the eCall service is defined by a voice call, carried out by means of an in-band modem, meaning information and data use the same band or channel.

This call transmits perfectly defined data, called minimum set of data (MSD), which include the geo-location of the vehicle and the vehicle identification number (VIN), as well as other data. The data that the MSD must contain are standardized in a European Union regulation.

If considered appropriate, occupants of the vehicle may prevent the call from being made if they consider they do not need 112 services.

In the case of category M1 vehicles (sedans), according to standardized regulations on vehicle classification, accidents are detected since vehicles have said detection systems to release the airbags if necessary. Said systems are totally prepared to identify accidents and distinguish between an accident and an event that is not considered an accident, for the purposes of minimizing the repair costs of the vehicle and possible user dissatisfaction due to what could be a malfunctioning of the system.

On the other hand, the European Commission is subsidizing projects in Europe (for example, the I_HeERO project) to improve and widen the field of application of this post-crash safety system to other vehicle categories, as well as for new mobile phone systems that are expected to be available in the near future.

New vehicle categories considered to incorporate these types of eCall safety systems include commercial vehicles for transporting goods, in particular dangerous goods, and motorcycles (PTW or P2W), categories L3 and L1.

For example, the European Commission has promoted the SAFERIDER project, in which they developed a helmet able to detect an impact to the head during an accident and measure the severity of the head injury after impact.

During the HeERO2 project, a system was developed for detecting an accident on a motorcycle wherein the helmet incorporated impact sensors that could detect a severe impact to the head as a result of an accident and give an idea as to the severity of the head impact.

There are patent applications or patents such as EP2881921A1, which describes an accident notification apparatus mounted on a motorcycle and a wireless unit carried by the rider such that when communication is lost between both units during a period of time, an accident alarm is activated.

Other solutions, such as publications DE10210975B4, CN203776226U, EP1312273B1 or Spanish patent P201631158 are based almost exclusively on different types of sensors of the rider's helmet.

Also, publication WO 2016/107846 A1 discloses a method for detecting an accident, in which at least one first sensor unit is associated with a vehicle and at least one second sensor unit is associated with a driver of the vehicle, wherein values of kinematic variables are detected using each of the sensor units, wherein for the vehicle a first parameter space, into which values of kinematic variables for a start of a journey are recorded, and a second parameter space, into which values of the kinematic variables for an end of the journey are recorded, are determined, wherein for the driver a third parameter space, into which values of kinematic variables are recorded for the start of the journey, and a fourth parameter space, into which values of the kinematic variables are recorded for an end of the journey, are determined, wherein after the journey the first and the second parameter space and the third and the fourth parameter space are compared with each other in order to detect the accident.

Moreover, publication DE 20 2017 100238 U1 discloses transmitting/receiving device for the automatic reporting of accidents in two-wheeled, three-wheeled and four-wheeled vehicles, comprising: a transmitting device, which is coupled to a two-wheeled, three-wheeled or four-wheeled vehicle and comprising a wireless transmitter which repeatedly transmits a wireless signal; a receiving device, which is carried by the driver or front passenger of the vehicle, comprising a battery; a wireless receiver which receives said wireless signal; a controller which measures the strength of the received wireless signal and transmits an alarm signal if said magnitude is below a certain threshold.

### Description of the invention

It is necessary to provide an alternative to the state of the art that patches the holes found therein and which is, therefore, in contrast to existing solutions.

Specifically, we propose a system for detecting and reporting motorcycle accidents according to claim 1.

As can be seen, the detection of a motorcycle accident is a task that is far more complex than detection solutions provided for four-wheeled vehicles or than the aforementioned solutions already known, due to the following reasons or problems solved by this invention:
- A motorcycle is much lighter than a four-wheeled vehicle and, therefore, the uneven pavement, holes, curbs of sidewalks, etc., cause accelerations on the structure of the vehicle that could be comparable to those of an accident, which is why the values monitored by already known systems alone are not able to accurately detect an accident.
- The motorcycle tilts on curves and, therefore, detecting only the tilt would not indicate an accident. If a single determining criterion were used to detect the tilt, many false alarms may be activated, given that the vehicle is unstable and could fall to the ground with out there having been an action which can be considered a relevant accident, thereby generating a false emergency call.
- It is determined that an accident can be detected with complete certainty if, and only if, there has been damage to the user's clothes or helmet, regardless of what happens to the motorcycle. This is correct, but it conflicts with the reality, in that the state of the art does not currently provide for clothing to be designed to detect damages on any area thereof and the helmet is not always violently impacted in order for the system used in said helmet to detect a head injury. Moreover, the user is currently not obligated to wear a complete standardized motorcycle suit and boots.

Furthermore, we must add that an eCall system, as currently designed, must have the geo-location and transmit the MSD through a voice call.
Therefore, if these types of systems require a voice call, it is so the emergency telephone services, 112 for Europe, can be in contact with the person who had the accident, and therefore, an audio system in the helmet must be provided to facilitate said communication.

Since on occasion the person in the accident and the motorcycle itself end up very far from one another, the system that makes the call cannot be provided in the motorcycle, given that in these cases voice communication to 112 would not be possible due to the fact that the wireless connection between the motorcycle and the helmet would be lost, which is, for example, by means of Bluetooth, Bluetooth Low Energy, or RFID.

Although a solution of this type could be considered involving the use of a smart phone, for example using a mobile application, given that the same already has geo-location and can collect data on the motorcycle and other accessories such as the helmet and clothing, the vulnerability of a common smart phone, as well as its low degree of mechanical resistance, makes this option a poor one. There are smart phones that are more durable and have stronger resistance to impact, but it must be added that this additional component would entail higher costs. Furthermore, all of the aforementioned points must be taken into consideration knowing that the use of the GPS and telecommunications with the rest of the system (100) in a continuous way would shorten the life of the battery, and could lead to a situation in which the mobile phone does not have enough battery energy to make an eCall when necessary. This problem is solved by one of the preferred embodiments of the present invention by installing modules with greater battery capacity on the motorcycle system, which is able to provide enough energy during the use thereof.

Another problem solved by this invention, apart from the previous one, is that occasionally two people are riding on the motorcycle, and it could be the case that one ends up far from the other in an accident and that the emergency services find and assist only one, who, if unconscious, is unable to inform them that there is another passenger, and, therefore, the second passenger would not be aided by the emergency services.

### Brief description of the drawings

In order to assist in a better understanding of the characteristics of the invention and with the aim of complementing this description, the following figures are attached constituting an integral part of the same, which, by way of illustration and non-limitation, represent the following:

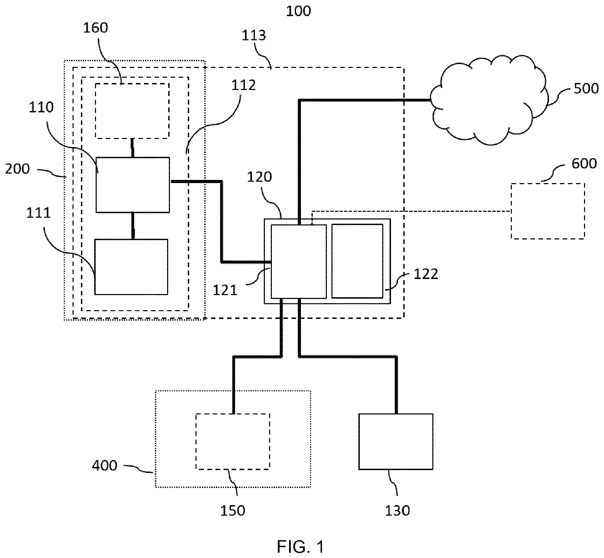

Figure 1 shows a diagram of the system with the different modules, elements or devices that make up the same, as well as the interaction between them and other systems or elements. This figure represents one of the embodiments of the invention, specifically when the system is used by only the driver of the vehicle and wherein the sensing, calculation capacity for detection and the call are all carried out from modules located on the motorcycle, while the driver carries the module that allows the distance from the modules placed on said motorcycle to be measured when an accident takes place and is detected.

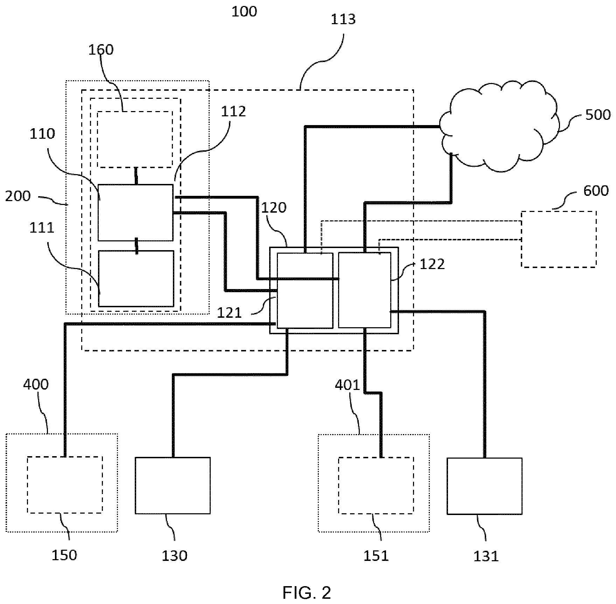

Figure 2 shows a diagram of the system with the different modules, elements or devices that make up the same, as well as the interaction between them and other systems or elements. This figure represents another one of the embodiments of the invention, specifically when the system is used both by the driver of the vehicle and the passenger and wherein the sensing, calculation for detection and the call are all carried out from modules located on the motorcycle, while the driver and the passenger each carry a separate submodule that allows the distance from the modules placed in said motorcycle to be measured when an accident takes place and is detected.

### Detailed description of the invention

As can be seen in the attached figures, the system (100) proposed, in the most complete form thereof, is made up of the following elements:
- a first module (110) located in the motorcycle with means for obtaining a location of the motorcycle (200) at all times, means for detecting the acceleration and tilt of the motorcycle, and means for communicating with other modules of said system.
   Optionally, said module (110) is arranged to detect, on the one hand, if said motorcycle (200) is in operation, in other words, it is connected to the electronics of the motorcycle (200) and is therefore able to detect when the engine of the motorcycle (200) is running and when it is turned off. This device could be used to turn the engine on and off.
   On the other hand, said module (110) has geo-location capability and, as such, can calculate the speed of the vehicle at all times. Said geo-location capability is generally carried out through GPS.
   Additionally, and optionally, said module (110) can incorporate one or several sensors (160), such as an accelerometer and/or a gyroscope, arranged to measure the tilt as well as the acceleration and turns of the motorcycle (200).
   The module has means for communicating with other modules of the system. Said communication can be wireless, generally through Bluetooth, Bluetooth Low Energy or RFID.
- A module with calculation capacity (111) with processing means for detecting when an accident takes place, and with means for communicating to other modules of the system. This module is generally located on the motorcycle.
   In an embodiment, said communication means can be wireless, generally being Bluetooth, Bluetooth Low Energy, Wi-Fi or RFID.
- A portable module (120) that can be physically separated into two analogue submodules (121 and 122) with means for communicating with other elements of said system. When physically joined, said submodules behave as a single module (120) and only the means of one of the parts function, and when they are physically separated, the means of both parts function independently. This module (120) or the submodules (121 and 122) have means for making an emergency call.

It will function as a single module (120) when only the driver is on the motorcycle (200) and as separate modules (121 and 122) when a passenger accompanies the driver, and therefore one part is carried by the driver and the other by the passenger, such that the situation when only the driver is on the motorcycle can be distinguished from when the driver is accompanied by a passenger, the two different situations able to be controlled.

Generally, this portable module (120) automatically behaves as a single element or as two elements (121, 122) when both parts are physically joined or when they are separated, respectively, without the need for the user to perform any type of operation.

In one embodiment, said communication means can be wireless, generally being Bluetooth, Bluetooth Low Energy, Wi-Fi or RFID.

In one embodiment, said portable module (120) or submodules (121 and 122) can be implemented in portable devices carried by the driver and/or passenger.

This portable module (120) or the submodules (121 and 122) can be located in the wireless key or starter device of the motorcycle (200). With this solution, the driver carries a single device for both functions, for starting the motorcycle and as a safety element, and furthermore, motorcycle manufacturers can control all of the components of the accident detection system, without the same depending on other external elements which could lead to legal problems with regard to responsibility in the case of failure. In other words, the key of the motorcycle or the starter device is something that can be acquired with a double function and can be entirely controlled, which is why this type of solution, which integrates the key with the portable device, may be appealing. With this solution, when there is a passenger accompanying the driver, the passenger will carry the other part of the key or portable device with the second submodule (122) while the module (121) will remain with the driver.

In one embodiment, said module (110), including these elements as the GPS or another type of sensors (160) and the module with calculation capacity (111), are integrated into a single module (112). Said integrated module (112) is located on the motorcycle (200) since it has more space and energy sources, a battery and alternator, without practical limitations, both for the modules with calculation capacity (120) and for the module (110) and the sensors and communication means thereof, which guarantees a continuous use without the risk of lacking energy, and furthermore allows for more complex electronics, as well as algorithms for more complex calculations, contributing to an optimal accident detection reliability, including more or fewer sensors and therefore increasing or reducing the complexity of the system, as well as the costs thereof.

In another embodiment, both the module (110), as well as the module with calculation capacity (111) and the portable module (120) are integrated into a single module (113). And optionally, said integrated module (113) can go in the motorcycle (200) itself to take advantage of the energy, space, etc.

One of the main advantages of the present invention is that it can identify if one or two riders are on the motorcycle (200) and report this fact in an emergency call. The detection of the accident is done in said module with calculation capacity (111) based at least on the information received from the module (110) on location, acceleration or tilt, as well as on the calculation of the distance between said portable module (120) or submodules (121 and 122) and said module (110).

The calculation of the distance between the module (120) or submodules (121 and 122) and the module (110) is done as a function of the intensity of the connection signal between said module (110) and said module (120) or submodules (121 and 122). This calculation of the distance between the motorcycle and the driver and optionally the passenger improves the reliability of accident detection, since in an accident the driver and/or passenger are normally separated from the motorcycle when it is still moving. With this technology, the estimation of the distance can be different for each user. Said estimation of distance could be sent in the emergency call.

The wireless keys or wireless starter devices of the motorcycle itself incorporates security means, among which the motorcycle starts only when the key is within a specific radius of the motorcycle, in order to prevent theft. In an embodiment, the calculation of the distance between the portable module (120) or submodules (121 and 122) and the module (110) is done with the same technology used in these wireless keys or wireless starter devices and as such the cost and complexity of the implementation of the system is reduced.

When the module with calculation capacity (111) detects an accident based on the aforementioned information, it communicates the same to the module (110) and in said communication, apart from other types of information, it at least communicates if the motorcycle (200) has one or two riders.

In one embodiment, it is the module (110) that makes the emergency call, or eCall, with the information of the accident detected, using the means for making said type of call with which it is equipped.

Emergency systems require the geo-location of the vehicle, and therefore, the GPS information that is integrated into the system in the module (110) allows the vehicle to be located, yet this additional information, meaning knowing if there is one or two people, allows appropriate resources to be mobilized and allows one to know when the search for the occupants must be stopped, and therefore offers better service for an accident.

Moreover, for a more precise and reliable estimation, the previously mentioned data can be complemented with data from the sensor systems on the helmet, clothing, footwear and/or other equipment. Thus, said module with calculation capacity (111) has processing means for making said calculations.

The emergency call, or eCall, will preferably be made through means for establishing 2G, 3G, 4G, etc., mobile communication (500), which the module (110) is equipped with, but optionally, said communication can be made through a smart phone (600) the user is carrying.

In the invention, the portable module (120) or submodules (121 and 122) can also have means for making an emergency call and, therefore, when said module with calculation capacity (111) detects an accident, it will be able to notify said portable module (120) or submodules (121 and 122) to make the call.

The system optionally has audio and microphone means (130, 131) so that the driver and, optionally, the passenger, can communicate on the emergency call when it is made after the accident.

In one embodiment, said audio and microphone means (130, 131) wirelessly communicate with the module (110), while in another embodiment, in said audio and microphone means (130, 131) communication is made with the portable module (120) or submodules (121 and 122), all of which depends on which module makes the emergency call in order to use the appropriate means for the same.

Said audio and microphone means (130, 131) can be located in the device (110) or the portable module (120) or submodules (121 and 122), or as an additional wearable external element, which could be integrated into the helmet for greater comfort, or in a mobile type portable device.

During the operation of the portable module (120) with the two parts (121, 122) together, according to figure 1, therefore, the portable module (120) carried by the driver, a single communication will be established between this portable module (120), the module with calculation capacity (111) and the module (110) or, optionally, with the rest of the elements, for example, optionally, with the audio and microphone system (130) and/or with other sensors (150) that can be located for example on the user's clothing (400) and/ or in the helmet, and/or another device of the type that is worn on clothing or carried by the user, in other words being a wearable device.

On the other hand, as shown in figure 2, when the portable module (120) is physically separated into two parts or submodules (121 and 122) and one is carried by the driver (121) and the other by the passenger (122), respectively, both parts (121, 122) are wirelessly and separately connected to the module (110), the module with calculation capacity (111) and optionally to other elements such as the audio and microphone system (130 and 131) and/or the rest of the sensors (150, 151) that each user can carry on their clothing (400) and/or helmet and/or wearable device, respectively.

As was previously indicated, in an emergency call or eCall, perfectly defined data, called the minimum set of data, or MSD, is transmitted, which include the geo-location of the vehicle and the vehicle identification number (VIN), as well as other data. In the present invention, in addition to sending the VIN, the module identifier (120) or identifier of each one of the submodules (121, 122) is also sent, which allows the existence of one or two passengers to be identified. The vehicle identification number (VIN) and the portable module (120) and submodule (121 and 122) identifiers may additionally be printed on said modules, either as a scannable tag or code, or even by means of an energy-efficient, RFID type tag or monitor.

Optionally, said module (120), or in the case that there are two (121, 122), has means for emitting an audible warning or a specific wireless signal when an accident is detected to facilitate the location of each occupant carrying the module. This is useful since in certain accidents an injured person may be out of sight, behind bushes or trees or down a very steep hill which prevents them from quickly being located. A signal emitted by one or two portable parts will, without a doubt, facilitate a more effective and speedy tracking of the occupants.

Optionally, the system can have data-collecting sensors (150, 151) that can be located on their clothing, helmet, the motorcycle or a wearable device, worn by the driver (400) or the passenger (401), such that said sensors (150, 151) are arranged to communicate said data to the portable module (120) or submodules (121 and 122).

The type of sensors (150, 151) that may be used for such task could be, for example, sensors that allow data on the rider's state of health to be collected, such as a heart-rate sensor, body temperature sensor, etc. These additional sensors can generally improve the reliability of the detection of accidents by providing different information on the user and not only on the motorcycle (for example, a forceful impact to the helmet). Above all, they can contribute to improving the estimation of the severity of the user's accident, instead of in an indirect way, such as seeing what happens to the motorcycle.

The type of sensors (150, 151) that can be placed on the motorcycle include an occupancy sensor, placed on the seat of the passenger, for example, which shows if weight is detected, but where the portable device has not been separated into two parts. In these cases, the warning to the occupants can be implemented in the motorcycle providing a sound, or in the module (120) or submodules (121 and 122) providing a sound or vibration. The warning must be made during a limited time, in a similar way to the seatbelt for a passenger in a car.

This detection of the occupants of the motorcycle by means of sensors can be sent to the portable module (120) or submodules (121 and 122) so that, in case an emergency call is made, the number of occupants can be sent.

The portable module (120) or submodules (121 and 122) of the system can also include means so that the user and/or passenger, while on the motorcycle, can indicate how many occupants there are and, therefore, be notified in the case of an emergency call.

A combination of both types of identification for identifying the number of occupants, either by sensors or indicated directly by the user, is possible, in which case, the identifier of the number by the sensor allows the selection made by the user to be validated.

Preferably, communication between said sensors (150, 151) and the portable module (120) or submodules (121 and 122) will be through Bluetooth, Bluetooth Low Energy or RFID.

Generally, the devices that form part of this system can be configured through an application installed on a smart phone (600), tablet, computer or similar device, and therefore, by using said application through wireless communications, for example through Bluetooth, Bluetooth Low Energy or RFID, the different devices or components become linked or paired according to the previous description.

It must be mentioned that although throughout the description specific functions in the device (110) have been identified, others in the portable module (120) or modules (121, 122), or even sensors that can preferably go on the motorcycle, clothes or helmet of the rider, also within the scope of this description would be that said portable module (120) or separate modules (121, 122) incorporate all of, or part of, these functions and/or sensors. Likewise, it would also be viable and within the scope of this system to include redundancy elements, such as, in a non-exclusive sense, duplicating the functions of the emergency call in the module (110) and the portable module (120) or modules (121, 122).

## Claims

1. A system for detecting and reporting motorcycle accidents, comprising:
- a first module (110) located in the motorcycle (200) with means for obtaining the location of the motorcycle at all times, means for detecting the acceleration and tilt of the motorcycle, and means for communicating with other modules of said system,
- a module with calculation capacity (111) located in the motorcycle with processing means for detecting when an accident takes place and with means for communicating to other modules of the system,
- a portable module (120) with means for communicating with other elements of said system,
wherein said detection of the accident is done in said module with calculation capacity (111) based at least on the information received from the module (110) on location, acceleration or tilt, and,
wherein said module with calculation capacity (111) is configured to communicate the detection of the accident to the portable module (120), the mentioned system being **characterized in that**
the portable module (120) can be physically separated into two analogue submodules (121 and 122) with means for making an emergency call, wherein if both submodules (121 and 122) are physically joined they are configured to act as a single module and only the means of one of the parts function, and when they are physically separated, the means of both parts are configured to function independently, wherein the portable module (120) or submodules (121 and 122) are located in the wireless key or starter device of the motorcycle (200),
wherein said detection of the accident is done in said module with calculation capacity (111) based on the calculation of the distance between said portable module (120) or submodules (121 and 122) and said module (110)
wherein said calculation of the distance is a function of the intensity of the connection signal between said first module (110) and said portable module (120) or submodules (121 and 122),
wherein said module with calculation capacity (111) is configured to identify that there is only one occupant on the motorcycle (200) if the submodules (121 and 122) of said portable module (120) are physically joined and identifies that there are two occupants if they are physically separated,
wherein said portable module (120) is configured to make an emergency call using the means for making emergency calls and
wherein said call communicates if there are one or two occupants, as well as other information.

2. The system for detecting and reporting motorcycle accidents according to claim 1, **characterized in that** the calculation of the distance between said first module (110) and said portable module (120) or submodules (121 and 122) uses the same technology of wireless connectivity that the key or starter device of the motorcycle uses to calculate the safety distance between the key or starter device and the motorcycle.

3. The system for detecting and reporting motorcycle accidents according to claim 1, **characterized in that** the first module (110) and the module with calculation capacity (111) are integrated in a single module (112).

4. The system for detecting and reporting motorcycle accidents according to claim 1, **characterized in that** said module with calculation capacity (111) is portable and integrated into the portable module (120) or the submodules (121 and 122).

5. The system for detecting and reporting motorcycle accidents according to claim 1, **characterized in that** said system additionally comprises audio and microphone means (130), either integrated into the portable module (120) or into each one of the submodules (121 and 122), or arranged to wirelessly communicate with said device (120) or submodules (121 and 122), and be used for said emergency call when it is made after an accident.

6. The system for detecting and reporting motorcycle accidents according to claim 1, **characterized in that** said first module (110) comprises means for making an emergency call.

7. The system for detecting and reporting motorcycle accidents according to claim 5, **characterized in that** said system additionally comprises audio and microphone means (130), either integrated into said first module (110) or arranged to wirelessly communicate with said first module (110) and to be used for said emergency call when it is made after an accident.

8. The system for detecting and reporting motorcycle accidents according to claim 1, **characterized in that** in said emergency call, vehicle information, such as the VIN and the submodule identifier, when applicable, which makes the call, are sent, and wherein said identifiers are shown in said portable module (120) or submodules (121 and 122) in the form of an energy-efficient monitor, a tag or scannable code.

9. The system for detecting and reporting motorcycle accidents according to claim 1 or 5, **characterized in that** the means for making said emergency call are configured to use wireless communication with a smart phone (600) that has means for making said call to the mobile network and wherein the communication with said first module (110) or said portable module (120) or the submodules (121 and 122) thereof is preferably Bluetooth, Bluetooth Low Energy or any other type of wireless connectivity.

10. The system for detecting and reporting motorcycle accidents according to any of the preceding claims, **characterized in that** said system additionally incorporates sensors on the clothes of the driver (150) and/or on the clothes of the passenger (151) and/or helmet and/or wearable device, wherein said sensors incorporate wireless communication means for sending the data collected to said portable module (120) or submodules (121 and 122) and wherein the module with means for making the emergency call, the portable module (120) or submodules (121 and 122) thereof, are configured to send said data in said emergency call when an accident is detected.

11. The system for detecting and reporting motorcycle accidents according to claim 10, **characterized in that** said sensors (150, 151) are sensors for detecting heart-rate and/or body temperature or sensors for other vitals.

12. The system for detecting and reporting motorcycle accidents according to any of the preceding claims, wherein said means of communication between the different modules of said system are wireless, such as Bluetooth or Bluetooth Low Energy.

13. The system for detecting and reporting motorcycle accidents according to any of the preceding claims, wherein the configuration of the different devices of the system is done through said means with an application located in a smart phone (600), tablet or computer.

14. The system for detecting and reporting motorcycle accidents according to claim 1, **characterized in that** said system additionally incorporates an occupancy sensor, preferably a weight or pressure sensor, in the passenger seat, wherein said sensor incorporates wireless communication means for sending the state thereof to said portable module (120) or submodule (122) thereof when it detects the presence of said passenger, and wherein said state is used so that the portable module (120) or any other part of the system alerts that the portable module (120) must be divided into submodule (121) and submodule (122), if the same has not already been done, and/or to report the number of occupants on the motorcycle in the emergency call.

15. The system for detecting and reporting motorcycle accidents according to claim 1, **characterized in that** said portable module (120) has means for allowing the user to indicate if there are one or two occupants, wherein said information of the number of occupants on the motorcycle is reported in the emergency call.

16. The system for detecting and reporting motorcycle accidents according to claim 1, **characterized in that** said portable module (120), or each one of the submodules (121, 122) thereof, has means for emitting an audible warning or a specific wireless signal to facilitate the location of each occupant when an accident is detected.

17. The system for detecting and reporting motorcycle accidents according to claim 1, **characterized in that** said portable module (120), or each one of the submodules (121, 122) thereof, has means for the passive identification thereof in the form of an RFID type, energy-efficient, scannable tag or code, such that said code is included in the optional field of the MSD for the unequivocal identification of said portable module (120) or submodules (121 and 122).

## Patentansprüche

1. System zum Erkennen und Melden von Motorradunfällen, umfassend:
- ein erstes Modul (110), das sich im Motorrad (200) befindet, mit Mitteln zum Erhalten des Standorts des Motorrads, Mitteln zum Erkennen der Beschleunigung und Neigung des Motorrads und Mitteln zum Kommunizieren mit anderen Modulen des Systems,
- ein im Motorrad befindliches Modul mit Rechenkapazität (111) mit Verarbeitungsmitteln zum Erkennen, wann ein Unfall stattfindet, und mit Mitteln zum Kommunizieren mit anderen Modulen des Systems,
- ein tragbares Modul (120) mit Mitteln zum Kommunizieren mit anderen Elementen des Systems,
wobei die Erfassung des Unfalls in dem Modul mit der Berechnungskapazität (111) basierend mindestens auf den vom Modul (110) empfangenen Informationen über Position, Beschleunigung oder Neigung erfolgt, und,
wobei das Modul mit der Berechnungskapazität (111) konfiguriert ist, um die Erkennung des Unfalls an das tragbare Modul (120) zu kommunizieren, wobei das erwähnte System **dadurch gekennzeichnet ist, dass** das tragbare Modul (120) physisch in zwei analoge Submodule (121 und 122) mit Mitteln zum Tätigen eines Notrufs getrennt werden kann, wobei, falls beide Submodule (121 und 122) physisch verbunden sind, sie konfiguriert sind, um als ein einziges Modul zu fungieren und nur die Mittel eines der Teile funktionieren, und wenn sie physisch getrennt sind, die Mittel beider Teile konfiguriert sind, um unabhängig voneinander zu funktionieren,
wobei sich das tragbare Modul (120) oder die Submodule (121 und 122) in dem Funkschlüssel oder der Startervorrichtung des Motorrads (200) befinden,
wobei die Erkennung des Unfalls in dem Modul mit der Berechnungskapazität (111) basierend auf der Berechnung des Abstands zwischen dem tragbaren Modul (120) oder den Submodulen (121 und 122) und dem Modul (110) erfolgt, wobei die Berechnung dem Abstand eine Funktion der Intensität des Verbindungssignals zwischen dem ersten Modul (110) und dem tragbaren Modul (120) oder den Submodulen (121 und 122) ist,
wobei das Modul mit der Berechnungskapazität (111) konfiguriert ist, um zu identifizieren, dass es nur einen Aufsassen auf dem Motorrad (200) gibt, wenn die Submodule (121 und 122) des tragbaren Moduls (120) physisch verbunden sind, und identifiziert, dass es zwei Aufsassen gibt, wenn sie physisch getrennt sind,
wobei das tragbare Modul (120) konfiguriert ist, um einen Notruf unter Verwendung der Mittel zum Tätigen von Notrufen zu tätigen und
wobei der Anruf kommuniziert, ob es einen oder zwei Aufsassen gibt, sowie andere Informationen.

2. System zum Erkennen und Melden von Motorradunfällen nach Anspruch 1, **dadurch gekennzeichnet, dass** die Berechnung des Abstands zwischen dem ersten Modul (110) und dem tragbaren Modul (120) oder den Submodulen (121 und 122) dieselbe Technologie der drahtlosen Verbindung verwendet, die der Schlüssel oder die Startervorrichtung des Motorrads zur Berechnung der Sicherheitsabstands zwischen dem Schlüssel oder der Startervorrichtung und dem Motorrad verwendet.

3. System zum Erkennen und Melden von Motorradunfällen nach Anspruch 1, **dadurch gekennzeichnet, dass** das erste Modul (110) und das Modul mit Rechenkapazität (111) in einem einzigen Modul (112) integriert sind.

4. System zum Erkennen und Melden von Motorradunfällen nach Anspruch 1, **dadurch gekennzeichnet, dass** das Modul mit Rechenkapazität (111) tragbar und in das tragbare Modul (120) oder die Submodule (121 und 122) integriert ist.

5. System zum Erkennen und Melden von Motorradunfällen nach Anspruch 1, **dadurch gekennzeichnet, dass** das System zusätzlich Audio- und Mikrofonmittel (130) umfasst, die entweder in das tragbare Modul (120) oder in jedes der Submodule (121 und 122) integriert sind oder so angeordnet sind, dass sie drahtlos mit der Vorrichtung (120) oder den Submodulen (121 und 122) kommunizieren und für den Notruf verwendet werden, wenn er nach einem Unfall getätigt wird.

6. System zum Erkennen und Melden von Motorradunfällen nach Anspruch 1, **dadurch gekennzeichnet, dass** das erste Modul (110) Mittel zum Tätigen eines Notrufs umfasst.

7. System zum Erkennen und Melden von Motorradunfällen nach Anspruch 5, **dadurch gekennzeichnet, dass** das System zusätzlich Audio- und Mikrofonmittel (130) umfasst, die entweder in das erste Modul (110) integriert sind oder so angeordnet sind, dass sie drahtlos mit dem ersten Modul (110) kommunizieren und für den Notruf verwendet werden, wenn er nach einem Unfall getätigt wird.

8. System zum Erkennen und Melden von Motorradunfällen nach Anspruch 1, **dadurch gekennzeichnet, dass** in dem Notruf Fahrzeuginformationen wie die Fahrgestellnummer und gegebenenfalls die Submodul-Kennungen, die den Anruf tätigt, gesendet werden, und wobei die Kennungen in dem tragbaren Modul (120) oder den Submodulen (121 und 122) in Form eines energieeffizienten Monitors, eines Tags oder eines scannbaren Codes gezeigt werden.

9. System zum Erkennen und Melden von Motorradunfällen nach Anspruch 1 oder 5, **dadurch gekennzeichnet, dass** die Mittel zum Tätigen des Notrufs konfiguriert sind, um eine drahtlose Kommunikation mit einem Smartphone (600) zu verwenden, das Mittel zum Tätigen des Anrufs in das Mobilfunknetz aufweist, und wobei die Kommunikation mit dem ersten Modul (110) oder dem tragbaren Modul (120) oder den Submodulen (121 und 122) davon vorzugsweise Bluetooth, Bluetooth Low Energy oder eine beliebige andere Art von drahtloser Verbindung sind.

10. System zum Erkennen und Melden von Motorradunfällen nach einem der vorstehenden Ansprüche, **dadurch gekennzeichnet, dass** das System zusätzlich Sensoren an der Kleidung des Fahrers (150) und/oder an der Kleidung des Beifahrers (151) und/oder des Helms und/oder der tragbaren Vorrichtung enthält, wobei die Sensoren drahtlose Kommunikationsmittel zum Senden der gesammelten Daten an das tragbare Modul (120) oder Submodule (121 und 122) enthalten und wobei das Modul mit Mitteln zum Tätigen des Notrufs, das tragbare Modul (120) oder die Submodule (121 und 122) davon konfiguriert sind, um die Daten in dem Notruf zu senden, wenn ein Unfall erkannt wird.

11. System zum Erkennen und Melden von Motorradunfällen nach Anspruch 10, **dadurch gekennzeichnet, dass** die Sensoren (150, 151) Sensoren zum Erkennen von Herzfrequenz und/oder Körpertemperatur oder Sensoren für andere Vitalwerte sind.

12. System zum Erkennen und Melden von Motorradunfällen nach einem der vorstehenden Ansprüche, wobei die Kommunikationsmittel zwischen den verschiedenen Modulen des Systems drahtlos sind, wie beispielsweise Bluetooth oder Bluetooth Low Energy.

13. System zum Erkennen und Melden von Motorradunfällen nach einem der vorstehenden Ansprüche, wobei die Konfiguration der verschiedenen Vorrichtungen des Systems über diese Mittel mit einer Anwendung erfolgt, die sich in einem Smartphone (600), Tablet oder Computer befindet.

14. System zum Erkennen und Melden von Motorradunfällen nach Anspruch 1, **dadurch gekennzeichnet, dass** das System zusätzlich einen Anwesenheitssensor, vorzugsweise einen Gewichts- oder Drucksensor, auf dem Mitfahrersitz enthält, wobei der Sensor drahtlose Kommunikationsmittel zum Senden des Zustands davon an das tragbare Modul (120) oder Submodul (122) davon enthält, wenn er die Gegenwart des Mitfahrers erkennt, und wobei der Zustand derart verwendet wird, dass das tragbare Modul (120) oder ein beliebiger anderer Teil des Systems darauf hinweist, dass das tragbare Modul (120) in Submodul (121) und Submodul (122) unterteilt werden muss, falls dies noch nicht geschehen ist, und/oder die Anzahl der Aufsassen auf dem Motorrad in dem Notruf gemeldet werden muss.

15. System zum Erkennen und Melden von Motorradunfällen nach Anspruch 1, **dadurch gekennzeichnet, dass** das tragbare Modul (120) Mittel aufweist, mit denen der Benutzer angeben kann, ob ein oder zwei Aufsassen vorhanden sind, wobei die Informationen über die Anzahl der Aufsassen auf dem Motorrad im Notruf gemeldet wird.

16. System zum Erkennen und Melden von Motorradunfällen nach Anspruch 1, **dadurch gekennzeichnet, dass** das tragbare Modul (120) oder jedes der Submodule (121, 122) Mittel zum Emittieren einer akustischen Warnung oder eines spezifischen Funksignals aufweist, um die Lokalisierung jedes Aufsassen zu erleichtern, wenn ein Unfall erkannt wird.

17. System zum Erkennen und Melden von Motorradunfällen nach Anspruch 1, **dadurch gekennzeichnet, dass** das tragbare Modul (120) oder jedes seiner Submodule (121, 122) Mittel zur passiven Identifizierung davon in Form eines energieeffizienten, scannbaren Tags oder Codes vom RFID-Typ aufweist, so dass der Code im optionalen Feld der MSD zur eindeutigen Identifizierung des tragbaren Moduls (120) oder der Submodule (121 und 122) eingeschlossen ist.

## Revendications

1. Système de détection et de signalement d'accidents de moto, comprenant :
- un premier module (110) localisé dans la moto (200) avec des moyens pour obtenir à tout moment la localisation de la moto, des moyens pour détecter l'accélération et l'inclinaison de la moto, et des moyens pour communiquer avec d'autres modules dudit système,
- un module à capacité de calcul (111) localisé dans la moto avec des moyens de traitement pour détecter le moment où un accident se produit et avec des moyens pour communiquer à d'autres modules du système,
- un module portable (120) avec des moyens pour communiquer avec d'autres éléments dudit système,
dans lequel ladite détection de l'accident est effectuée dans ledit module à capacité de calcul (111) sur la base au moins des informations reçues du module (110) sur la localisation, l'accélération ou l'inclinaison, et,
dans lequel ledit module à capacité de calcul (111) est configuré pour communiquer la détection de l'accident au module portable (120), le système mentionné étant **caractérisé en ce que** le module portable (120) peut être physiquement séparé en deux sous-modules analogues (121 et 122) avec des moyens pour passer un appel d'urgence, dans lequel si les deux sous-modules (121 et 122) sont physiquement reliés, ils sont configurés pour agir comme un module unique et seuls les moyens de l'une des parties fonctionnent, et lorsqu'ils sont physiquement séparés, les moyens des deux parties sont configurés pour fonctionner indépendamment,
dans lequel le module portable (120) ou les sous-modules (121 et 122) sont localisés dans la clé sans fil ou le dispositif de démarrage de la moto (200),
dans lequel ladite détection de l'accident est effectuée dans ledit module à capacité de calcul (111) sur la base du calcul de la distance entre ledit module portable (120) ou sous-modules (121 et 122) et ledit module (110) dans lequel ledit calcul de la distance dépend de l'intensité du signal de connexion entre ledit premier module (110) et ledit module portable (120) ou sous-modules (121 et 122),
dans lequel ledit module à capacité de calcul (111) est configuré pour identifier qu'il n'y a qu'un seul occupant sur la moto (200) si les sous-modules (121 et 122) dudit module portable (120) sont physiquement reliés et identifie qu'il y a deux occupants s'ils sont physiquement séparés,
dans lequel ledit module portable (120) est configuré pour passer un appel d'urgence en utilisant les moyens pour passer des appels d'urgence et
dans lequel ledit appel communique s'il y a un ou deux occupants, ainsi que d'autres informations.

2. Système de détection et de signalement d'accidents de moto selon la revendication 1, **caractérisé en ce que** le calcul de la distance entre ledit premier module (110) et ledit module portable (120) ou sous-modules (121 et 122) utilise la même technologie de connectivité sans fil que la clé ou le dispositif de démarrage de la moto utilise pour calculer la distance de sécurité entre la clé ou le dispositif de démarrage et la moto.

3. Système de détection et de signalement d'accidents de moto selon la revendication 1, **caractérisé en ce que** le premier module (110) et le module à capacité de calcul (111) sont intégrés dans un seul module (112).

4. Système de détection et de signalement d'accidents de moto selon la revendication 1, **caractérisé en ce que** ledit module à capacité de calcul (111) est portable et intégré au module portable (120) ou aux sous-modules (121 et 122).

5. Système de détection et de signalement d'accidents de moto selon la revendication 1, **caractérisé en ce que** ledit système comprend en outre des moyens audio et microphone (130), soit intégrés au module portable (120) soit à chacun des sous-modules (121 et 122), soit agencés pour communiquer sans fil avec ledit dispositif (120) ou sous-modules (121 et 122), et être utilisé pour ledit appel d'urgence lorsqu'il est passé après un accident.

6. Système de détection et de signalement d'accidents de moto selon la revendication 1, **caractérisé en ce que** ledit premier module (110) comprend des moyens pour passer un appel d'urgence.

7. Système de détection et de signalement d'accidents de moto selon la revendication 5, **caractérisé en ce que** ledit système comprend en outre des moyens audio et microphone (130), soit intégrés audit premier module (110), soit agencés pour communiquer sans fil avec ledit premier module (110) et pour être utilisé pour ledit appel d'urgence lorsqu'il est passé après un accident.

8. Système de détection et de signalement d'accidents de moto selon la revendication 1, **caractérisé en ce que** dans ledit appel d'urgence, les informations sur le véhicule, comme le VIN et l'identifiant du sous-module, le cas échéant, ce qui effectue l'appel, sont envoyées, et dans lequel lesdits identifiants sont affichés dans ledit module portable (120) ou sous-modules (121 et 122) sous la forme d'un moniteur économe en énergie, une balise ou un code scannable.

9. Système de détection et de signalement d'accidents de moto selon la revendication 1 ou 5, **caractérisé en ce que** les moyens pour passer ledit appel d'urgence sont configurés pour utiliser une communication sans fil avec un smartphone (600) qui a des moyens pour passer ledit appel vers le réseau mobile et dans lequel la communication avec ledit premier module (110) ou ledit module portable (120) ou les sous-modules (121 et 122) de celui-ci est de préférence le Bluetooth, le Bluetooth à basse consommation ou tout autre type de connectivité sans fil.

10. Système pour la détection et le signalement d'accidents de moto selon l'une quelconque des revendications précédentes, **caractérisé en ce que** ledit système incorpore en outre des capteurs sur les vêtements du conducteur (150) et/ou sur les vêtements du passager (151) et/ou casque et ou dispositif portable, dans lequel lesdits capteurs incorporent des moyens de communication sans fil pour l'envoi des données collectées vers ledit module portable (120) ou sous-modules (121 et 122) et dans lequel le module avec des moyens pour passer l'appel d'urgence, le module portable (120) ou les sous-modules (121 et 122) de celui-ci, sont configurés pour envoyer lesdites données dans ledit appel d'urgence lorsqu'un accident est détecté.

11. Système de détection et de signalement d'accidents de moto selon la revendication 10, **caractérisé en ce que** lesdits capteurs (150, 151) sont des capteurs pour la détection de la fréquence cardiaque et/ou de la température corporelle ou des capteurs pour d'autres signes vitaux.

12. Système pour la détection et le signalement d'accidents de moto selon l'une quelconque des revendications précédentes, dans lequel lesdits moyens de communication entre les différents modules dudit système sont sans fil, tels que le Bluetooth ou le Bluetooth à basse consommation.

13. Système pour la détection et le signalement d'accidents de moto selon l'une quelconque des revendications précédentes, dans lequel la configuration des différents dispositifs du système est effectuée par le biais desdits moyens avec une application localisée dans un smartphone (600), une tablette ou un ordinateur.

14. Système de détection et de signalement d'accidents de moto selon la revendication 1, **caractérisé en ce que** ledit système incorpore en outre un capteur de présence, de préférence un capteur de poids ou de pression, sur le siège passager, dans lequel ledit capteur incorpore des moyens de communication sans fil pour l'envoi de l'état de celui-ci vers ledit module portable (120) ou sous-module (122) de celui-ci lorsqu'il détecte la présence dudit passager, et dans lequel ledit état est utilisé de sorte que le module portable (120) ou tout autre partie du système alerte que le module portable (120) doit être divisé en sous-module (121) et sous-module (122), si cela n'a pas déjà été fait, et/ou pour signaler le nombre d'occupants de la moto dans l'appel d'urgence.

15. Système de détection et de signalement d'accidents de moto selon la revendication 1, **caractérisé en ce que** ledit module portable (120) a des moyens pour permettre à l'utilisateur d'indiquer s'il y a un ou deux occupants, dans lequel lesdites informations sur le nombre d'occupants sur la moto sont signalées dans l'appel d'urgence.

16. Système de détection et de signalement d'accidents de moto selon la revendication 1, **caractérisé en ce que** ledit module portable (120), ou chacun des sous-modules (121, 122) de celui-ci, a des moyens pour émettre un avertissement sonore ou un signal sans fil spécifique pour faciliter la localisation de chaque occupant lorsqu'un accident est détecté.

17. Système de détection et de signalement d'accidents de moto selon la revendication 1, **caractérisé en ce que** ledit module portable (120), ou chacun des sous-modules (121, 122) de celui-ci, a des moyens pour l'identification passive de celui-ci sous la forme d'une balise ou code scannable du type RFID, à faible consommation, de sorte que ledit code soit inclus dans le champ facultatif de l'ensemble minimal de données, MSD (*minimum set of data*) pour l'identification sans équivoque dudit module portable (120) ou desdits sous-modules (121 et 122).
